# EUROPEAN PATENT APPLICATION

(11) **EP 1 598 969 A1**
(43) Date of publication of application: **23.11.2005**
(21) Application number: 04291262.6
(22) Date of filing: 17.05.2004
(51) Int. Cl.: H04J 3/16

(54) **Optimized link capacity adjustment scheme**

(71) Applicant: ALCATEL, 75008 Paris (FR)
(72) Inventor: Cucchi, Silvio, 20083 Gaggiano (MI) (IT); Cazzaniga, Giorgio, 23804 Monte Marenzo (LC) (IT)
(74) Representative: Menzietti, Domenico

(57) **Abstract**

A method is described for performing a link capacity adjustment scheme (LCAS) in a telecommunication network carrying digital signals arranged in frames and transmitted using a virtual concatenation group (VCG) composed of members. The scheme uses a sequence of multiframes identified by a second multiframe indicator (MFI2) carrying the status of the members (MST) of the virtual concatenation group. When a failure occurs on a member of the virtual concatenation group, the failed member is removed from the group decreasing the bandwidth, while when the failure is repaired, the member is added hitless. The invention provides a method to minimize the time needed to react to a failure of a member of the virtual concatenation group: this is achieved transmitting a member status different for two subsequent members of the virtual concatenation group in correspondence of a particular second multiframe indicator.

## Description

### Field of the invention:

The present invention relates to the telecommunication field and more in particular to digital signals transported in a Virtual Concatenated Group (VCG) and controlled by a Link Capacity Adjustment Scheme (LCAS). Still more in particular the invention concerns to a method to minimize the time needed to react to a failure of a member of the virtual concatenated group.

### Background of the invention:

Traditional SDH/SONET (SDH=Synchronous Digital Hierarchy, SONET= Synchronous Optical NETwork) networks use a pre-defined hierarchy of synchronous payloads, as defined in ITU-T G.707 (12/2003). Originally, this hierarchical structure enabled easy aggregation of lower rate streams carrying voice traffic. For the transport of payloads that exceed the payload capacity of the standard set of Virtual Containers (VC-3/VC-4/VC-2/VC-12/VC-11 for SDH), VC concatenation was defined. Two types of concatenations were defined: contiguous and virtual concatenation. Contiguous concatenation has been part of SDH/SONET from its early days. It was conceived to accommodate high-speed data applications that use protocols such as ATM, Packet-over-SONET (PoS) and others that require high-bandwidth mappings over SDH/SONET. To enable this, multiple VCs are transported (and switched) across the SDH/SONET network as a single connection with the first SDH/SONET container payload pointer set in normal mode, and the subsequent payload pointers set to concatenation mode, thus linking all the units together. One POH (Path Overhead) is used for the whole VC4-Xc and it is located in the first column of the VC4-Xc, while columns 2 to X are fixed stuff. The concatenation functionality is required at each network element and not only at the end points of the path termination. For the SDH hierarchy, contiguous concatenation of X VC4 (with X=4, 16, 64, 256) is defined at high-order for high-speed data services and of X VC2 (with X=1...7) at low-order for low-speed services. For high-order the contiguously concatenated VC4-Xc and corresponding payload rates are:
VC4-4c: 599.040 Mbps
VC4-16c: 2.396.160 Mbps
VC4-64c: 9.584.640 Mbps
VC4-256c: 38.338.560 Mbps.

For low-order the VC2-Xc, with value of X between 1 and 7, provides payload rates between 6.784 Kbps and 47.488 Kbps in steps of 6.784 Kbps.

Although contiguous concatenation has been successfully introduced and deployed for years, it posed some major deficiencies:
- contiguous concatenation doesn't address one of the main limitations of traditional SDH/SONET networks, that is the coupling between path establishment and physical resource reservation. In other words, with traditional SDH/SONET networks, even when physically available SDH/SONET paths exist, they may not be usable because of the non-contiguous concatenation nature of the available containers;
- some of the legacy SDH/SONET equipments may not support contiguous concatenation transport switching at higher rates such as VC4-64c and VC4-256c in some regions;
- some applications may require finer granularity of payloads than contiguous concatenation can offer.

To address these limitations, Virtual Concatenation has been defined for SDH and SONET in ITU-T G.707 (12/2003) and for OTN (Optical Transport Network) in ITU-T G.709 (03/2003). Virtual Concatenation defines a procedure whereby the contiguous bandwidth is divided into equal parts at the transmitting side and logically represents them in a Virtual Concatenation Group (VCG). A VCG is so composed of members and for SDH the members are the VCs (Virtual Containers), wherein each VC has its own POH. The VCG members are transported as individual members across the SDH network over diverse routes and recombined at the far end destination VCG receiver. More than one VCG can be defined from a transmitting to a receiving side and each VCG can comprise a different number of members. For the SDH hierarchy, virtual concatenation of X VC3/4s (X=1...256) is defined for high-order and of X VC11/12/2 (X=1..64) for low-order. Because of different propagation delay associated with individual member in the VCG, a sequencing scheme has been developed to help identify the differential delay and the associated realignment process. Intermediate network elements do not perform path termination for these connections, and therefore, do not need to be virtual concatenation aware. High-order VCs (55 Mbps and 155 Mbps) are grouped when transporting high-speed data services such as Gigabit Ethernet and Fiber Channel; low-order VCs (1,5 Mbps, 2 Mbps and 6,3 Mbps) are used for low-speed data services such as 10 Mbps and 100 Mbps Ethernet.

The Link Capacity Adjustment Scheme (LCAS), as defined in ITU-T G.7042/Y.1305 (08/2003), is a complementary protocol to Virtual Concatenation and can be used both for SDH/SONET and OTN networks. It works unidirectionally, enabling carriers to provide asymmetric bandwitdth, i.e. the bandwidth of a forward direction can be different from the bandwidth of the return direction. LCAS allows hitless adjustment of the size of a virtually concatenated group of members. LCAS takes care of the synchronization between the sender and receiver so that the size of a virtually concatenated group can be increased or decreased in response to a change in service bandwidth requirement in a manner that does not corrupt or interfere with the data signal. Moreover the size can be temporarily decreased in response to a fault condition in an existing member: since the members of a VCG don't need to use the same physical links of the network (path diversity), some of its members could experience a failed link along their path while the remaining members do not. Only the affected members of the VCG are removed: the user's bandwidth is temporarily reduced, so the service is up and running at a degraded level, but it is not interrupted. The removed member is added in a hitless way when the failure has been removed. LCAS operates at the end points of the connection only and so to deploy LCAS only new tributary cards are required, without requiring hardware upgrades to network elements throughout the entire network.

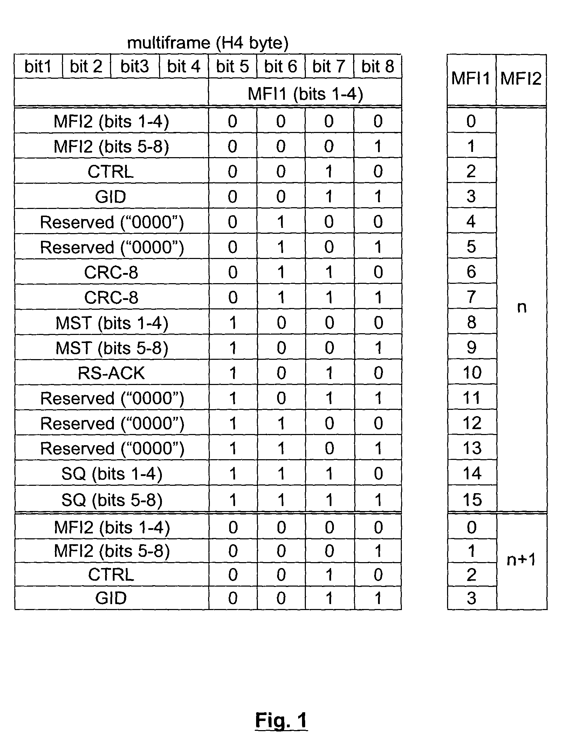

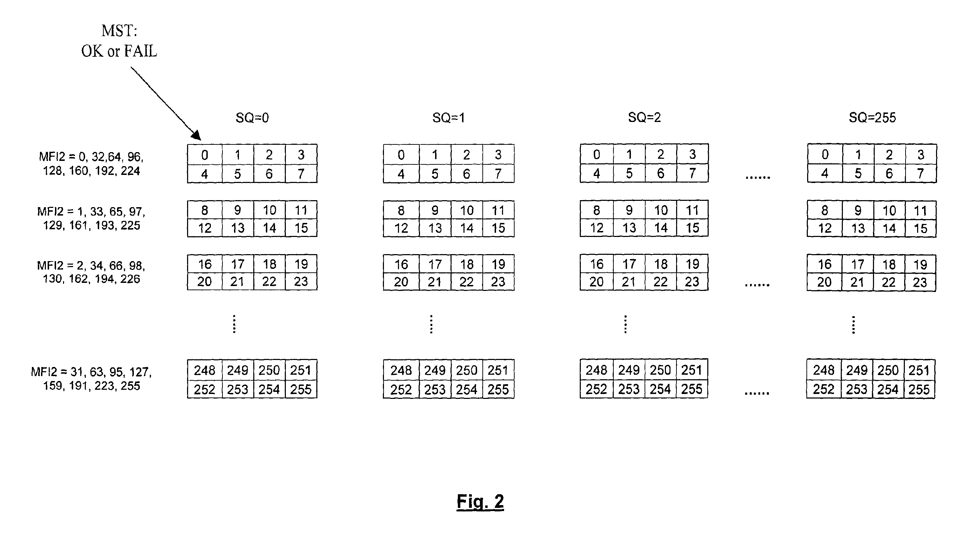

Referring hereafter to SDH networks and to a virtual concatenation of X VC4 (X=1..256), digital signals are arranged in frames 125 us long. Each frame includes the bytes carrying the VC4 composing the VCG and each VC4 has its own POH, which includes the H4 byte. The LCAS protocol uses a control packet shown in Fig.1, making use of the H4 byte; for each VC4 of the VCG there is a control packet composed of 16 frames, each one identified by a number MFI1. MFI1 uses bits 5-8 of H4: it is incremented every basic SDH frame (125 us) and counts cyclically from 0 to 15. Since the control packet of each member (VC4) is carried by more than one frame, it will be indicated as a "multiframe"; this multiframe is 2 ms long (125 us x 16 = 2 ms). Each VC4 in the VCG has its own multiframe because each VC4 has its own POH, which includes the H4 byte. Due to different propagation delay of the VC4, a differential delay has to be compensated and the individual VC4 have to be realigned for access to the payload area. The realignment process has to cover at least a differential delay of 125 us (one SDH frame). A two stage 512 ms multiframe is introduced to cover differential delays. The control packet is the multiframe of the first stage. A second multiframe indicator MFI2 for the second stage uses bits 1-4 in frames 0 and 1 of the multiframe of the first stage (MFI1=0 and 1). Referring to Fig.2, MFI2 is incremented once every multiframe of the first stage and counts from 0 to 255. The resulting overall multiframe is composed of 4096 frames and it is 512 ms long. The multiframe indicator MFI is the combination of the first and second multiframe indicator and is comprised between 0 and 4095. MFI is set at the transmitting side and it is used at the receiving side to realign the payload for the members of a VCG and to determine the differential delay between members of the same VCG.

Moreover the multiframe of the control packet includes the following fields:
- a sequence indicator (SQ);
- a group identification (GID):
- a member status (MST)
- a re-sequence acknowledge (RS-ACK);
- a control (CTRL)
- a CRC

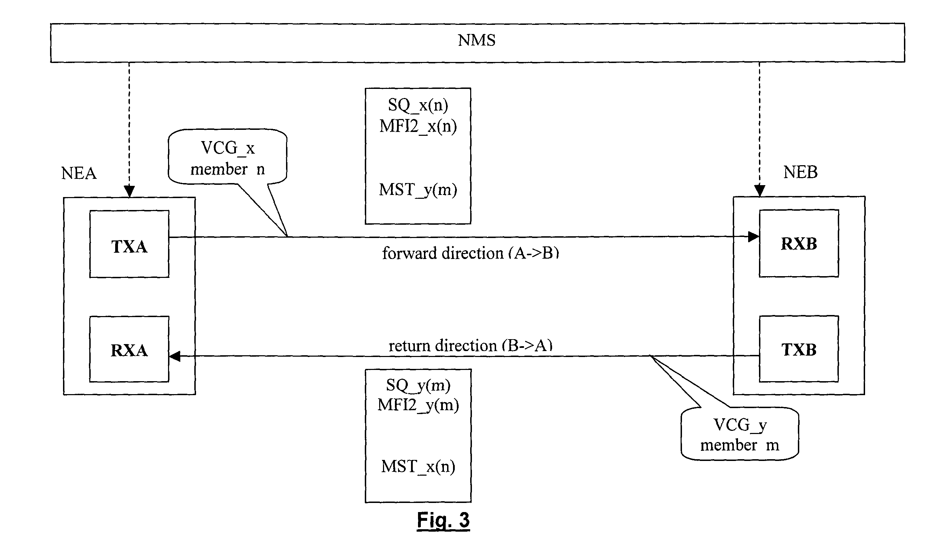

The sequence indicator is a 8-bit number transported in bits 1-4 of H4, using frames 14 and 15 of the multiframe (MFI1=14 and 15). This number is used to identify the sequence/order of each member (VC4) in the VCG and each member (VC4) has a fixed unique sequence indicator in the range of 0 to (X-1) to identify the member in the VCG; the VC4 transporting the first time slot has the sequence indicator 0, the second has the sequence indicator 1 and so on up to the VC4 number X with the sequence indicator (X-1). A VCG is composed of any number of members between 0 and X-1, but can be composed only of members having subsequent sequence indicator SQ. The group identification is a 4-bit number transported in bits 1-4 using frame 3 of the multiframe (MFI1=3). Since more than one VCG is allowed, this number is used for identification of the Virtual Concatenated Group. It is a pseudo-random number set at the transmitting side and for a group it has the same value for all members with the same MFI value. It is used by the receiver to verify that all the receiving members are originated from one transmitter. The CRC field is used to protect each control packet and is a 8-bit number transported in bits 1-4 using frames 6 and 7 of the multiframe (MFI1=6 and 7). The RS-ACK is a 4-bit number transported in bits 1-4 using frame 10 of the multiframe (MFI1=10): any change detected at the receiving side regarding the sequence indicator is reported to the transmitting side by toggling (i.e. changing from "0" to "1" or from "1" to "0") the RS-ACK bits. The CTRL field is used to transfer information from the transmitting to the receiving side with the purpose of synchronize the receiving with the transmitting side for adding and deleting a member; it is transported in bits 1-4 using frame 2 of the multiframe (MFI1=2). The member status field MST is an information sent back to indicate the status of all members of the VCG. It reports the member status with two states: OK or FAIL. This information is used to remove members that have experienced a failure; the removal of a member due to a failure is not hitless for the service carried over the Virtual Concatenated Group, while the addition, after the failure is repaired, is hitless. Fig.3 shows two network elements A (NEA) and B (NEB) using the LCAS protocol and the multiframes in the forward direction from A to B (A->B) and in the return direction from B to A (B->A). The figure shows only the two end network elements performing the LCAS scheme, but a network including intermediate network elements can be placed between NEA and NEB; moreover only one connection carrying one member is shown between NEA and NEB and viceversa, but many connections are possible, each one with a different route and each one carrying one member of a VCG. A network management system (NMS) is connected to NEA and NEB to control the network elements. NMS provides a VCG to NEA and a VCG to NEB: the first is identified by GID=x and is indicated with VCG_x, the second by GID=y and indicated with VCG_y. A member of VCG_x is identified by SQ=n and is indicated with member_n, while a member of VCG_y is identified by SQ=m and is indicated with member_m. member_n of VCG_x is transmitted in the forward direction by transmitter TXA of NEA, which sends to NEB the multiframes assigning SQ and MFI2 fields of member_n of VCG_x, indicated with SQ_x(n) and MFI2_x(n) respectively. NEB includes a receiver RXB to receive multiframes of member_n and to monitor the status of member_n: this is performed checking multiframes of member_n, i.e. the multiframes including the sequence indicator SQ_x(n). Status of member_n is assigned to fail if for example member_n is not received for a defined time unit. NEB includes a transmitter TXB to advise NEA of the failure of member_n of VCG_x, so that NEA can remove member_n from VCG_x in order to avoid loss of data carryed over member_n. NEB advises NEA of the failure of member_n assigning in the multiframe of member_m in the return direction the fail status MST_x(n) of member_n. The automatically removal of the failed member_n from the VCG_x in the forward direction is possibile only if there is in the return direction at least one VCG_y including at least one member_m carrying MST_x(n). NEA includes a receiver RXA to receive multiframes of member_m from NEB: when the received multiframes includes MST_x(n)=fail, member_n is removed from VCG_x and an invalid value is assigned to SQ_x(n), for example a value larger than the currently highest sequence number. After the failure is repaired, member_m received by RXA includes MST_x(n)=OK: member_n is added back to VCG_x in a hitless way. The same procedure is used for member_m of a VCG_y transmitted in the return direction: transmitter TXB of NEB assigns SQ_ y(m) and MFI2_y(m) in the multiframe in the return direction, while receiver RXA of NEA receives these fields, monitors the status of member_m and TXA assigns MST_y(m) in the multiframe in the forward direction. In summary, multiframes in the forward direction carries SQ and MFI2 of members of the VCG in the forward direction and MST of members of the VCG in the return direction, while multiframes in the return direction carries SQ and MFI2 of members of the VCG in the return direction and MST of members of the VCG in the forward direction.

Since the status of each member of the group is required, the member status is spread across multiple control packets (multiframes). The status is transported using frames 8 and 9 of the multiframe in bits 1-4 (MFI1=8 and 9), so that each multiframe carries the status of 8 members. Since the maximum number of VC4 in a VCG is 256, a group of 32 multiframes is required to carry the status of all the members of the VCG; each multiframe is 2 ms long and so 64 ms are required to carry the status of all 256 members. Each member receives in 32 multiframes the status of the maximum number of members (256), that is also the status of members not part of the VCG to which the member belongs. ITU-T G.707 defines that the MST is sent equal for each member of the VCG in correspondence with a particular MFI2 and defines that MST is sent according to an increasing order from two subsequent MFI2 values. Fig.2 shows the 32 multiframes required to carry the status of all members of the VCG: for each multiframe only the MST field is shown. The numbers indicated in each multiframe are the status of the member having this number as the SQ. For example for MF12=0 each multiframe of each member, each one identified by a SQ number, carries the status of members #0 until #7, for MFI2=1 the status of members #8 until 15, and so on.

According to this solution, the time needed to react to a faillure of a member in the VCG depends on the position of the failed member and it is a random number comprised between 2 ms and 64 ms. The first case (2 ms) happens when there is a failure of a member X and the next multiframe to be transmitted includes the status of member X. For example, a VCG is composed of 16 members identified by SQ from number #0 until #15. Suppose there is a failure of member #8 and the next multiframe to transmit is the multiframe in correspondence of MFI2=1; each multiframe includes the status of member #8, which is set immediately to fail. In this case the transmitting side has the information of the failure of member #8 after 2 ms and removes this member from the VCG. The second case (64 ms) happens when the status of member X has just been transmitted and there is a failure of member X: the updated status of member X will be transmitted after 64 ms. In the same example of a failure of member #8, the last multiframe transmitted is the multiframe in correspondence of MFI2=1, with status of member #8 set to OK. Suppose now there is a failure of member #8: the next time the fail status for this member will be transmitted is in correspondence of MFI2=33, after 64 ms. The mean time needed to react to a failure is defined as the sum of the minimum and the maximum time and this sum is divided by 2; according to this solution, the mean time is 32 ms. It is required to decrease the time needed to react to a failure of a member of the VCG, in order to reduce the loss of data for the service carryed over the VCG affected by the failure.

### Summary of the invention:

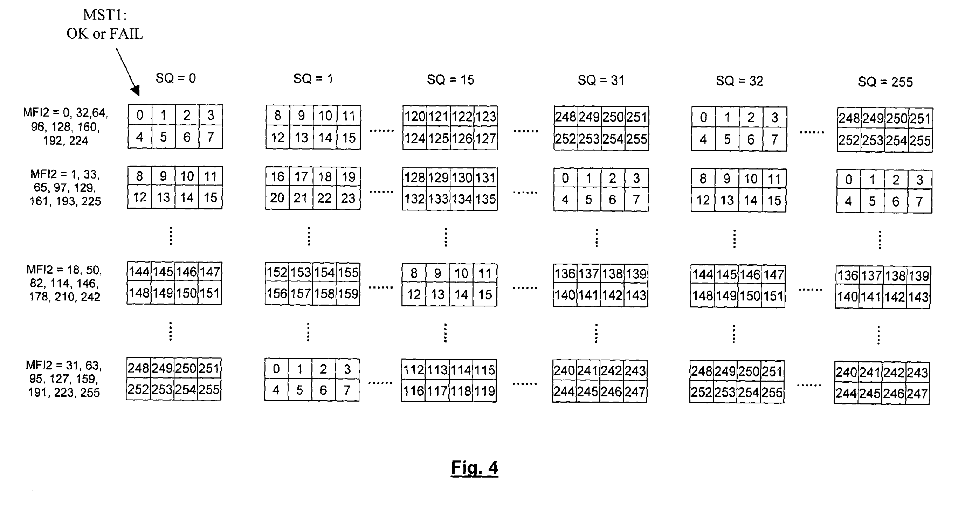

In view of the drawbacks and deficiencies of the known and standardized solutions, as described above, the main object of the present invention is to provide a method to minimize the time needed to react to a failure of a member of a virtual concatenation group in a link capacity adjustment scheme; this is achieved by a method according to claim 1. The basic idea is to transmit a member status different for two subsequent members of the VCG in corrispondence with a particular MFI2 value, i.e. the member status is dependent on the MFI2 and the SQ, as shown in Fig.4. The invention requires at least two subsequent members in the return direction because the two members are required for carrying the different values of member status fields. According to this solution, the mean time needed to react to a failure of a member in the VCG depends on the number of members and it is decreasing when the number of members is increasing. A further advantage of the present invention is to provide a network element able to perform the LCAS scheme according both to the invention and to the standard; this is achieved by a network element according to claim 7.

### Brief description of the drawings:

Fig.1, 2 and 3 relate to prior art.
Fig.1 shows the multiframe carrying the LCAS protocol for SDH network for signals transmitted using a virtual concatenation group composed of VC4.
Fig.2 shows the member status carryed by the multiframe in correspondence of the possibile MFI2 values as described in ITU-T G.707.
Fig.3 shows the multiframes sent between two network elements using the LCAS protocol.
Fig.4 shows an example of the member status carryed by the multiframe in correspondence of the possibile MFI2 values according to the invention.
Fig.5 shows the multiframes sent between two network elements using the LCAS protocol according to the invention.
Fig.6 shows one network element using the LCAS protocol according to prior art and one network element able to perform the LCAS protocol according both to prior art and to the invention.
Fig.7 shows one network element using the LCAS protocol according to the invention and one network element able to perform the LCAS protocol according both to prior art and to the invention.

### Best mode for carrying out the invention:

Referring to Fig.4, in a first preferred embodiment the member status (indicated with MST1) in correspondence of a particular second multiframe indicator MFI2 is transmitted different for subsequent members, according to an increasing order. For MFI2=0 the multiframe of member with SQ=0 carries the status of member #0 until #7, the multiframe of member with SQ=1 carries the status of member #8 to #15, and so on until the multiframe of the member with SQ=31 which carries the status of members #248 until #255. The order is restarted with the multiframe of member with SQ=32 carrying the status of members #0 to #7 and so on until the last member with SQ=255. The member status is transmitted according to an increasing order from two subsequent MFI2 values in correspondence of a particular member identified by the SQ number, that is for MFI2=1 the multiframe of member with SQ=0 carries the status of member #8 until #15, the multiframe of member with SQ=1 carries the status of member #16 to #23, and so on until the multiframe of member with SQ=31 which carries the status of member #0 until #7. Referring to the same example of a VCG composed of 16 VC4, the multiframes in correspondence of a particular MFI2 carries the status of 128 members (8 x 16). The minimum time needed to react to a failure of a member is always 2 ms, but the maximum time is decreased. The first case still happens when there is a failure of member #8 and the next multiframe to transmit is the multiframe in correspondence of MFI2=1. The multiframe of member with SQ=0 includes the status of member #8, which is set immediately to fail. The transmitting side has the information of the failure of member #8 after 2 ms. The second case is when the last multiframe transmitted is the multiframe in correspondence of MFI2=1, with status of member #8 set to OK. Now there is a failure of member #8: the next time the fail status for this member will be transmitted is in correspondence of MFI2=18 for member with SQ=15, after 32 ms.

The solution is more advantageous when the number of the members in the VCG in the return direction is increasing. The maximum time required to react to the failure is decreasing when the number of members is increasing and consequently the mean time is also decreasing. For a VCG composed of at least 32 members, the multiframes of all the members in correspondence of any MFI2 carries the status of all the members of the group: in this case the time needed to react to a failure is independent on the position of the failed member and is a deterministic value equal to the minimum (2 ms), because the status of all members of the VCG is sent from two subsequent MFI2 values.

In a second preferred embodiment the member status is transmitted according to a decreasing order from two subsequent members in correspondence of a particular second multiframe indicator MFI2.

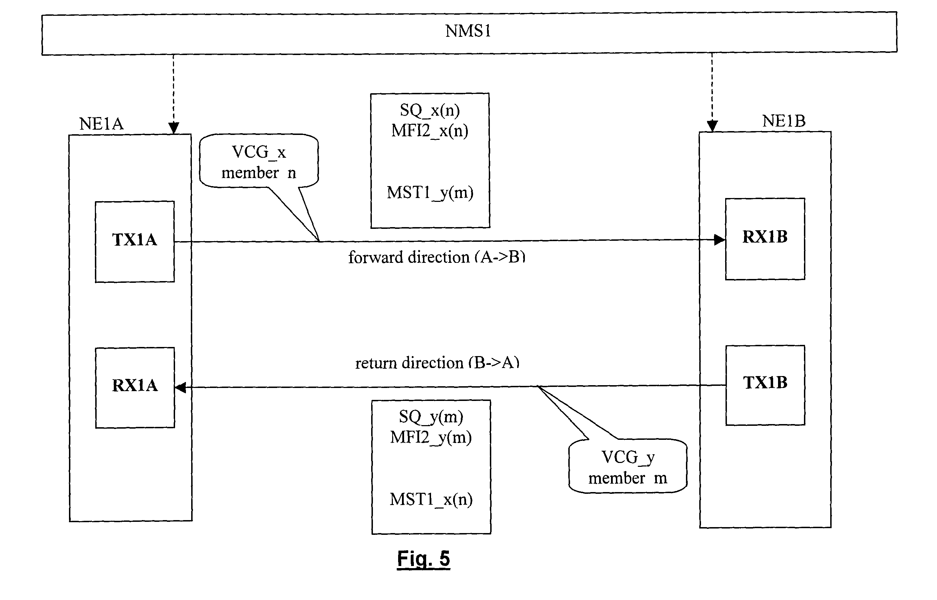

The method can be advantageously implemented on a network element, for example an Add-Drop Multiplexer (ADM), including hardware means like an Application Specific Integrated Circuit (ASIC), Field Programmable Gate Array (FPGA) or microprocessor to perform the link capacity adjustment scheme. Fig.5 is like Fig.3, but network elements assign member status according to the invention of Fig.4 and are indicated with NE1A and NE1B to differentiate from NEA and NEB of Fig.3 respectively; for the same reason member status is indicated with MST1_x(n) and MST1_y(m) to differentiate from MST_x(n) and MST_y(m) of Fig.3 respectively. NE1B includes a receiver RX1B and a transmitter TX1 B to receive VCG_x transmitted in the forward direction and to transmit VCG_y in the return direction; NE1A includes a receiver RX1A and a transmitter TX1A to receive VCG_y transmitted in the return direction and to transmit VCG_x in the forward direction. RX1 B receives SQ_x(n) and MFI2_x(n) and monitors the status of member_n checking the multiframes including SQ_x(n) in order to detect a failure of member_n. TX1B assigns in the multiframes of member_m in the return direction MST1_x(n)=fail for indicating the failure of member_n. RX1 B is also responsible for receiving MST1_y(m) and monitoring the value of this field: if MST1_y(m)=fail, TX1 B removes member_m from VCG_y and assigns an invalid value to SQ_y(m). The same method is performed at NE1A by RX1A receiving SQ_y(m), MFI2_y(m) and MST1_x(n) and by TX1A assigning SQ_x(n), MFI2_x(n) and MST1_x(n). Fig.5 is used only to show the steps required to react to a failure of a member of a VCG and shows only one member (member_m) in the return direction, but VCG_y must include at least two members in the return direction in order to reduce the time needed to react to the failure according to the invention.

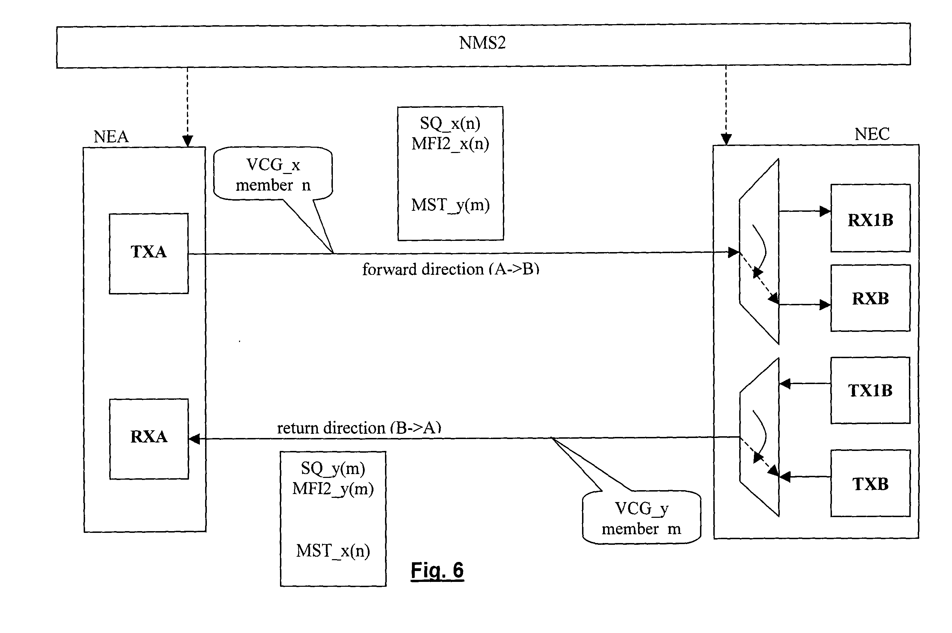

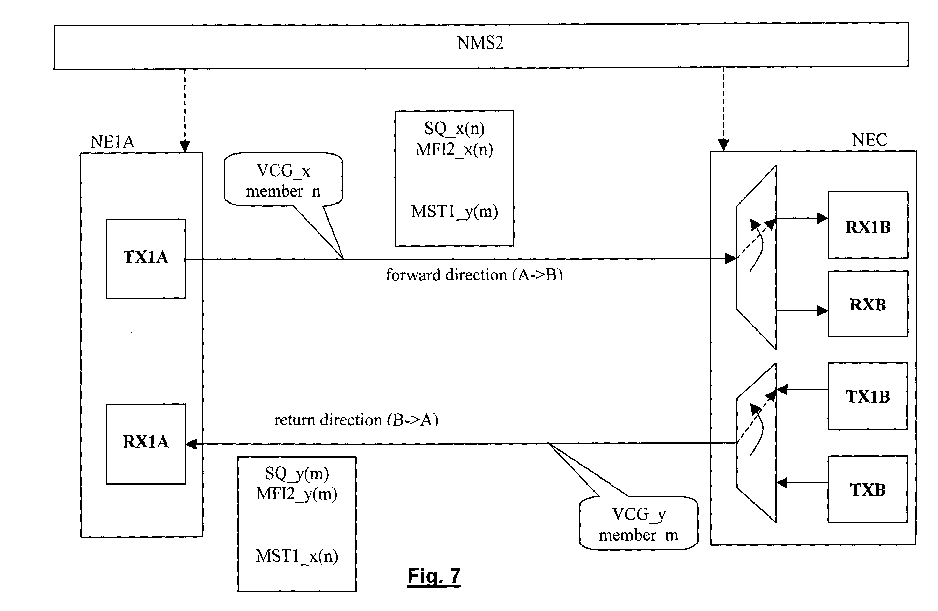

An inventive network element performing the inventive LCAS protocol can be connected to another inventive network element or to a network element performing the LCAS protocol according to the standard (ITU-T G.707 and G.709); since a telecommunication network usually includes network elements of different vendors, it is required to support both configurations of the LCAS scheme. This is shown in Fig.6 and Fig.7, wherein the inventive network element is indicated with NEC and can be connected to NEA performing only the standard LCAS protocol or to NE1A performing only the inventive LCAS protocol. In Fig.6 member status is indicated with MST_x(m) and MST_y(m) for indicating that it is assigned according to the standard, because NEA performs only the standard assignment of member status, while in Fig.7 is indicated with MST1_x(m) and MST1_y(m) for indicating that it is assigned according to the invention, because NE1A performs only the inventive assignment of member status. NEC includes the same receiver RX1 B and the same transmitter TX1 B of Fig.5 to receive the VCG_x in the forward direction and to transmit the VCG_y in the return direction according to the inventive LCAS protocol; moreover NEC includes the same receiver RXB and the same transmitter TXB of Fig.3 to receive the VCG_x in the forward direction and to transmit the VCG_y in the return direction according to the standard LCAS protocol. NEC also includes switching means to select means performing the inventive LCAS protocol or the standard LCAS protocol. Switching means are responsible to forward the virtual concatenation group received in the forward direction to RX1 B or RXB and to forward the virtual concatenation group of TX1 B or TXB to the virtual concatenation group transmitted in the return direction. Switching means for the received VCG can be a demultiplexer having one input, two outputs and one selector, the outputs connected to RX1B and RXB, the input receiving the VCG_x transmitted by NEA or NE1A and the selector to select RX1 B or RXB. Switching means for the transmitted VCG can be a multiplexer having two inputs, one output and one selector, the inputs connected to TX1B and TXB, the output transmitting VCG_y to NEA or NE1A, the selector to select TX1 B or TXB. Network elements shown in Fig.5, 6 and 7 includes blocks which can be hardware devices, software modules or combination of hardware devices and software modules.

Referring to Fig.5, 6 and 7, a network management system (NMS1, NMS2) is connected to the inventive network elements and is indicated with NMS1 and NMS2 to differentiate from NMS connected to standard network elements. A network management system is an hardware device, for example a personal computer or a workstation. A software program running on this system performs network management functions to control the network elements; the program is written in a programming language like C, C++ or Java. NMS1 is connected to network elements performing only the inventive LCAS protocol. The program running on NMS1 includes a module for transmitting to the network elements a parameter for activating the inventive method for assigning member status. NMS2 is connected to network elements performing both the inventive LCAS protocol and the standard LCAS protocol. The program running on NMS2 transmits to the network elements a second parameter for selecting the receiving means and the transmitting means performing the inventive LCAS protocol or the standard LCAS protocol.

The method is implemented in a preferred embodiment through or together with a software program like Very high speed integrated circuit Hardware Description Language (VHDL) mapped into an ASIC or FPGA or C language running on a microprocessor, by one or more VHDL processes or C routines. The software program thus includes for example a first process to receive the VCG in the forward direction, and for monitoring the status of members of the VCG in the forward direction in order to detect a failure of a member and a second process to transmit the VCG in the return direction and to assign SQ, MFI2 and MST for indicating the failure of a member of the VCG in the forward direction.

## Claims

1. Method for assigning member status for a virtual concatenation group (VCG_x) transmitted in a forward direction (A->B) in a telecommunication network carrying digital signals arranged in frames and transmitted using at least one virtual concatenation group in the forward direction and at least one virtual concatenation group in a return direction,
- a virtual concatenation group (VCG_y) transmitted in the return direction (B->A) including at least two members (SQ=0, SQ=1...),
- each member including at least two multiframes and having the same number of multiframes,
- each multiframe including a sequence indicator field (SQ_y(m)) to identify the member the multiframe belongs to, the values of the sequence indicator fields being incremented from member to member,
- each multiframe including a multiframe indicator field (MFI2, MFI2_y(m)) to identify the multiframe, the values of the multiframe indicator fields being incremented from multiframe to multiframe for each member and the values of the multiframe indicator fields of one member being equal to the values of each of the other members,
- each multiframe including a member status field (MST) for indicating the status of at least one member of the virtual concatenation group (VCG_x) in the forward direction, in such a way that the member status fields of the multiframes of each member indicate the status of all members of the virtual concatenation group (VCG_x) in the forward direction,
the method being **characterized by** assigning different values (0...7, 8...15) of member status fields (MST1) to two multiframes of two members of the virtual concatenation group (VCG_y) in the return direction, the two multiframes including subsequent values of the sequence indicator fields (SQ=0, SQ=1) and including the same value of the multiframe indicator field (MFI2=0).

2. Method according to claim 1, **characterized by** assigning values of member status fields (MST1) to multiframes including the same value of the multiframe indicator field according to an increasing or decreasing order (0...7, 8...15) and restarting this order (248..255, 0...7) when the status of all members (members_n) of the virtual concatenation group (VCG_x) in the forward direction are assigned.

3. A virtual concatenation group (VCG_y) transmitted in a return direction to perform a link capacity adjustment scheme in a telecommunication network carrying digital signals arranged in frames and transmitted using at least one virtual concatenation group (VCG_x) in a forward direction and at least one virtual concatenation group in the return direction,
- the virtual concatenation group (VCG_y) transmitted in the return direction (B-> A) including at least two members (SQ=0, SQ=1...),
- each member including at least two multiframes and having the same number of multiframes,
- each multiframe including a sequence indicator field (SQ_y(m)) to identify the member the multiframe belongs to, the values of the sequence indicator fields being incremented from member to member,
- each multiframe including a multiframe indicator field (MFI2, MFI2_y(m)) to identify the multiframe, the values of the multiframe indicator fields being incremented from multiframe to multiframe for each member and the values of the multiframe indicator fields of one member being equal to the values of each of the other members,
- each multiframe including a member status field (MST) for indicating the status of at least one member (member_n) of the virtual concatenation group (VCG_x) in the forward direction, in such a way that the member status fields of the multiframes of each member indicate the status of all members of the virtual concatenation group (VCG_x) in the forward direction,
**characterized in that** two multiframes of two members of the virtual concatenation group (VCG_y) in the return direction carry different values (0...7, 8...15) of member status fields (MST1), the two multiframes including subsequent values of the sequence indicator fields (SQ=0, SQ=1) and including the same value of the multiframe indicator field (MFI2=0).

4. A virtual concatenation group according to claim 3, **characterized in that** multiframes including the same value of the multiframe indicator field carry values of member status fields (MST1) according to an increasing or decreasing order (0...7, 8...15) and this order is restarted (248..255, 0...7) when the status of all members (members_n) of the virtual concatenation group (VCG_x) in the forward direction are assigned.

5. Network element (NE1B, NEC) including means (RX1B, TX1B) adapted to perform the method according to claim 1, the means including receiving means (RX1B) and transmitting means (TX1B) adapted to receive the virtual concatenation group (VCG_x) in the forward direction and to transmit the virtual concatenation group (VCG_y) in the return direction, the receiving means being adapted to monitor the status of at least one member (member_n) of the virtual concatenation group (VCG_x) in the forward direction in order to detect a possible failure of a member (member_n), the transmitting means being adapted to assign the sequence indicator fields (SQ_y(m)) and the multiframe indicator fields (MFI2_y(m)) of the virtual concatenation group in the return direction and the member status fields (MST1_x(n)) for indicating a detected failure of a member (member_n) of the virtual concatenation group (VCG_x) in the forward direction.

6. Network element (NE1 B, NEC) according to claim 5, the receiving means (RX1B) being adapted to receive the member status fields (MST1_y(m)) indicating a detected failure of member (member_m) of the virtual concatenation group (VCG_y) in the return direction, the transmitting means (TX1 B) being adapted to assign invalid sequence indicator fields (SQ_y(m)) for the failed member (member_m).

7. Network element (NEC) according to claim 5 including further receiving means (RXB) and further transmitting means (TXB) adapted to receive the virtual concatenation group (VCG_x) in the forward direction and to transmit the virtual concatenation group (VCG_y) in the return direction according to ITU-T G.707 or ITU-T G.709, the network element including first switching means (DEMUX) connected to the receiving means (RX1B) and the further receiving means (RXB) respectively and including second switching means (MUX) connected to the transmitting means (TX1 B) and the further transmitting means (TXB) respectively, the first switching means adapted to forward the virtual concatenation group received in the forward direction either to the receiving means or to the further receiving means, the second switching means adapted to forward in return direction either the virtual concatenation group of the transmitting means or the virtual concatenation group of the further transmitting means.

8. Network element according to claims 5 or 6 or 7, wherein the means are hardware devices or software modules or combination of hardware devices and software modules.

9. Software program to perform network management functions (NMS1, NMS2) to control at least one network element (NE1 B, NEC) according to claim 5, the program including at least one module for transmitting to the at least one network element a configuration parameter for activating the use of the method according to claim 1.

10. Software program to perform network management functions (NMS2) to control at least one network element (NEC) according to claim 7, the program including at least one module for transmitting to the at least one network element a first configuration parameter for activating the use of the method according to claim 1 and a second configuration parameter to control the switching means, in order to select the receiving means and the transmitting means or the further receiving means and the further transmitting means respectively.

11. Software program comprising software program code means adapted to perform all the steps of the method according to claim 1 when the program is run on a hardware, the program including:
- a first process to receive the virtual concatenation group (VCG_x) in the forward direction;
- a second process to transmit the virtual concatenation group (VCG_y) in the return direction;
the first process monitoring the status of a member (member_n) of the virtual concatenation group (VCG_x) in the forward direction in order to detect a failure of the member (member_n), the second process assigning the sequence indicator fields (SQ_y(m)), the multiframe indicator fields (MFI2_y(m)) and the member status fields (MST1_x(n)) for indicating the failure of the member (member_n) of the virtual concatenation group (VCG_x) in the forward direction.
